# FASCICULE DE BREVET EUROPEEN

(11) **EP 1 506 911 B1**
(45) Date de publication et mention de la délivrance du brevet: **17.10.2007**
(21) Numéro de dépôt: 04292040.5
(22) Date de dépôt: 11.08.2004
(51) Int. Cl.: B62D 37/02

(54) **Système de réduction des efforts aérodynamiques d'un véhicule automobile et véhicule automobile équipé d'un tel système**
System zur Reduzierung des Luftwiderstandes, und Kraftfahrzeug ausgerüstet mit einem derartigen System
Drag reduction device and automobile equipped with such a device

(30) Priorité: 13.08.2003 FR 0309924
(43) Date de publication de la demande: 16.02.2005
(73) Titulaire: Peugeot Citroën Automobiles S.A., 78140 Vélizy Villacoublay (FR)
(72) Inventeur: Aider, Jean-Luc, 75009 Paris (FR); Lasserre, Jean-Jacques, 92320 Chatillon (FR); Elena, Laurent, 75015 Paris (FR)
(74) Mandataire: Lanceplaine, Jean-Claude

(56) Documents cités:
- DE-A- 4 226 573
- FR-A- 916 198
- US-A- 2 037 942
- US-A- 3 529 862

## Description

La présente invention concerne un système de réduction des efforts aérodynamiques et plus particulièrement de la traînée et de la portance aérodynamiques d'un véhicule automobile et également un véhicule automobile équipé d'au moins un tel système.

Les véhicules automobiles, lorsqu'ils roulent, sont soumis à un certain nombre d'efforts qui s'oppose à leur avancement. Ces efforts sont en particulier les frottements solides, c'est à dire les contacts des roues avec le sol, et les frottements aérodynamiques, comme par exemple les frottements de l'air sur les parois de la carrosserie du véhicule.

En plus de ces frottements, les véhicules automobiles sont soumis à une troisième source d'efforts qui s'oppose également à leur avancement. Ces efforts sont les forces aérodynamiques exercées sur le véhicule à travers des régions de surpression et de dépression. En effet, à haute vitesse, ces efforts deviennent dominant par rapport aux autres et jouent un rôle essentiel sur la consommation et la stabilité du véhicule.

Ces forces aérodynamiques sont essentiellement générées par les dépressions créées par les décollements, les recirculations et les tourbillons longitudinaux de l'air. Les recirculations et donc les régions de basse pression sont importantes sur l'arrière du véhicule et particulièrement au niveau de la lunette arrière et du coffre. En effet, les écoulements de l'air à l'arrière des véhicules automobiles sont complexes et, en général, il se produit un équilibre entre les décollements et les tourbillons longitudinaux.

Les dispositifs utilisés en aérodynamique automobile interviennent sur le décollement qui a lieu sur l'arrière du véhicule, en particulier dans la région du raccord entre le pavillon et la lunette arrière, d'une part, et la lunette arrière et le coffre, d'autre part.

Les dispositifs classiques sont essentiellement constitués par des becquets, des ailerons ou des déflecteurs placés dans ces zones à l'arrière du véhicule.

Le becquet est utilisé le plus souvent pour réduire le coefficient de pénétration dans l'air et les autres systèmes sont plutôt utilisés pour réduire la portance.

On connaît également dans le document US-A-4 441 752 un système de réduction des efforts aérodynamiques et plus particulièrement de la traînée et de la portance aérodynamique d'un véhicule automobile comprenant une carrosserie dont la partie arrière comporte des éléments de carrosserie créant entre eux des zones tourbillonnaires, comprenant en amont d'au moins une desdites zones tourbillonnaires, des moyens d'aspiration d'air dans l'axe longitudinal du véhicule et, en aval de ladite au moins zone tourbillonnaire et des moyens de soufflage dans l'axe longitudinal du véhicule de cet air aspiré pour contrôler l'écoulement de l'air au niveau de la partie arrière du véhicule automobile.

L'invention a pour but de proposer un système aérodynamique qui permet de contrôler les tourbillons longitudinaux et les décollements et d'une manière générale la structure globale de l'écoulement de l'air sur la carrosserie d'un véhicule automobile.

L'invention a donc pour objet un système de réduction des efforts aérodynamiques et plus particulièrement de la traînée et de la portance aérodynamiques d'un véhicule automobile comprenant une carrosserie dont la partie arrière comporte des éléments de carrosserie créant entre eux des zones tourbillonnaires, ledit système comprenant, en amont d'au moins une desdites zones tourbillonnaires, des moyens d'aspiration d'air dans l'axe longitudinal du véhicule et, en aval de ladite au moins zone tourbillonnaire, des moyens de soufflage dans l'axe longitudinal du véhicule de cet air aspiré pour contrôler l'écoulement de l'air au niveau de la partie arrière du véhicule automobile, lesdits moyens d'aspiration et de soufflage étant reliés entre eux par au moins un conduit et comprenant perpendiculairement à l'axe longitudinal du véhicule au moins une fente ou des orifices ménagés dans l'élément de carrosserie correspondant pour former respectivement un rideau d'air ou des jets d'air, caractérisé en ce que la sortie de l'air de la fente ou des orifices est déclenchée à une vitesse déterminée du véhicule avec un angle et/ou une vitesse et/ou une fréquence variables en fonction d'informations fournies par au moins un capteur de vitesse et/ou de frottement et/ou de pression implanté sur au moins un des éléments de la carrosserie du véhicule automobile.

Selon d'autres caractéristiques de l'invention :
- la vitesse de sortie de l'air de la fente ou des orifices est variable et comprise entre 0,01 et 2,5 fois la vitesse du véhicule,
- l'angle de la direction de sortie de l'air de la fente ou des orifices varie entre -90° et + 90°,
- le débit de sortie de l'air de la fente ou des orifices est continu,
- le débit de sortie de l'air de la fente ou des orifices est discontinu et piloté selon une fréquence déterminée en fonction d'informations fournies par au moins un capteur de vitesse et/ou de frottement et/ou de pression implanté sur au moins un des éléments de la carrosserie du véhicule automobile,

L'invention a également pour objet un véhicule automobile, caractérisé en ce qu'il comporte au moins un système de réduction des efforts aérodynamiques tels que précédemment mentionné.

L'invention sera mieux comprise à la lecture de la description qui va suivre, donnée à titre d'exemple et faite en se référant aux dessins annexés, sur lesquels :
- les Figs. 1 à 4 sont des vues schématiques de la partie arrière d'un véhicule automobile équipée d'un système aérodynamique conforme à l'invention, selon différents modes de réalisation,
- la Fig. 5 est une vue schématique à plus grande échelle d'un premier mode de réalisation des moyens d'aspiration et de soufflage du système aérodynamique conforme à l'invention,
- la Fig. 6 est une vue schématique à plus grande échelle d'un second mode de réalisation des moyens d'aspiration et de soufflage du système aérodynamique conforme à l'invention.

Les véhicules automobiles, lorsqu'ils roulent, sont soumis à des efforts qui s'opposent à leur avancement et qui sont les frottements solides, les frottements aérodynamiques et, à haute vitesse, les forces aérodynamiques générées par les dépressions et par les décollements, les recirculations et les tourbillons longitudinaux de l'air.

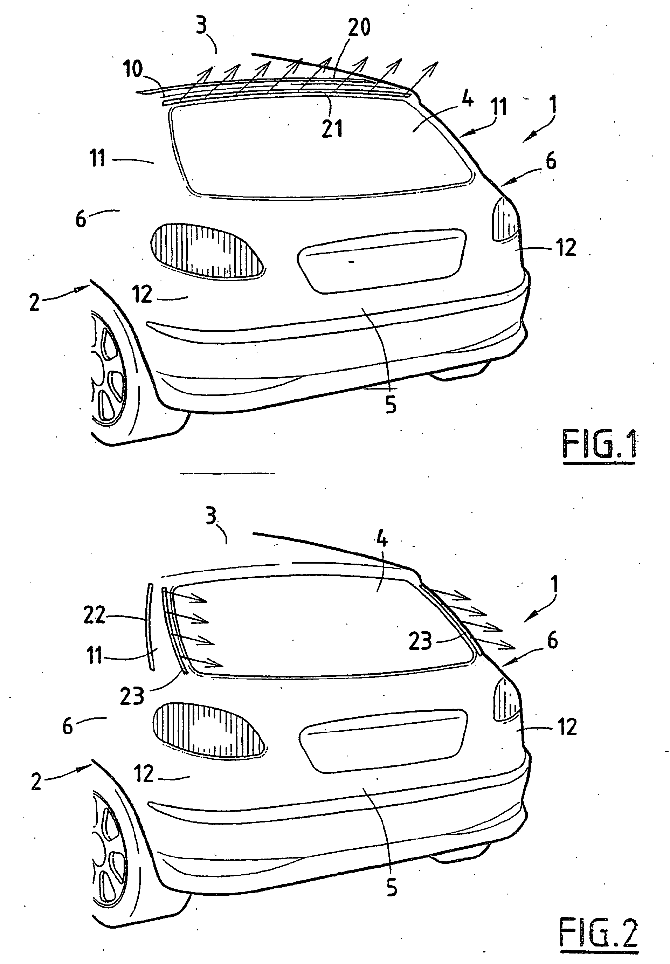

Ainsi, une carrosserie 2 d'un véhicule automobile 1, comme représentée sur les Figs. 1 à 4, comporte une partie arrière formée par des éléments de carrosserie générant des régions de basse pression où ces phénomènes sont particulièrement importants.

La partie arrière de la carrosserie 2 du véhicule comprend de manière classique, un pavillon 3, une lunette arrière 4, un panneau de coffre 5 et deux parois latérales 6.

Ces différents éléments de carrosserie déterminent entre eux notamment une arête transversale 10 entre le pavillon 3 et la lunette 4, deux arêtes longitudinales 11 formées par les montants de baie entre la lunette arrière 4 et chaque paroi latérale 6 et deux arêtes 12 formées entre le panneau d'un coffre 5 et les parois latérales 6.

Ces arêtes respectivement 10, 11 et 12 ainsi que la partie centrale 13 du panneau de coffre 5 constituent des zones de basse pression où les décollements, les recirculations et les tourbillons longitudinaux de l'air sont particulièrement importants.

Le système aérodynamique selon l'invention permet de contrôler les décollements et les tourbillons longitudinaux et par là-même la structure globale de l'écoulement de l'air à l'arrière de la carrosserie 2 du véhicule automobile 1 en modifiant les conditions limites de l'écoulement de l'air dans ces zones et l'équilibre entre les tourbillons longitudinaux et le décollement en perturbant ces tourbillons longitudinaux ou en favorisant ou non ces décollements.

Pour cela, l'une ou plusieurs ou l'ensemble de ces zones tourbillonnaires formées par les arêtes de jonction 10, 11 et 12 ainsi que par la partie centrale 13 du panneau de coffre 5 sont équipées d'un système aérodynamique conforme à l'invention et qui comprend, en amont de ladite zone tourbillonnaire, des moyens d'aspiration d'air et, en aval de cette zone tourbillonnaire, des moyens de soufflage de cet air aspiré afin de contrôler l'écoulement de l'air au niveau de la partie arrière du véhicule automobile 1.

D'une manière générale, les moyens d'aspiration et les moyens de soufflage aspire et souffle l'air dans l'axe longitudinal du véhicule.

Ainsi que montré à la Fig. 1, la zone tourbillonnaire formée par l'arête transversale 10 entre le pavillon 3 et la lunette arrière 4 comporte une fente d'aspiration 20 transversale disposée en amont de l'arête 10 et une fente de soufflage 21 transversale disposée en aval de cette arête 10. Ces fentes 20 et 21 sont reliées par exemple par au moins un conduit, non représenté, et l'air aspiré par la fente 20 est éjecté par la fente 21.

Comme montré à la Fig. 2, chaque montant de baie arrière 11 comporte une fente d'aspiration 22 disposée en amont de ce montant de baie 11 et une fente de soufflage 23 disposée en aval dudit montant de baie 11. Ces fentes 22 et 23 sont reliées par un conduit, non représenté, et l'air aspiré par la fente 22 est éjecté par la fente 23.

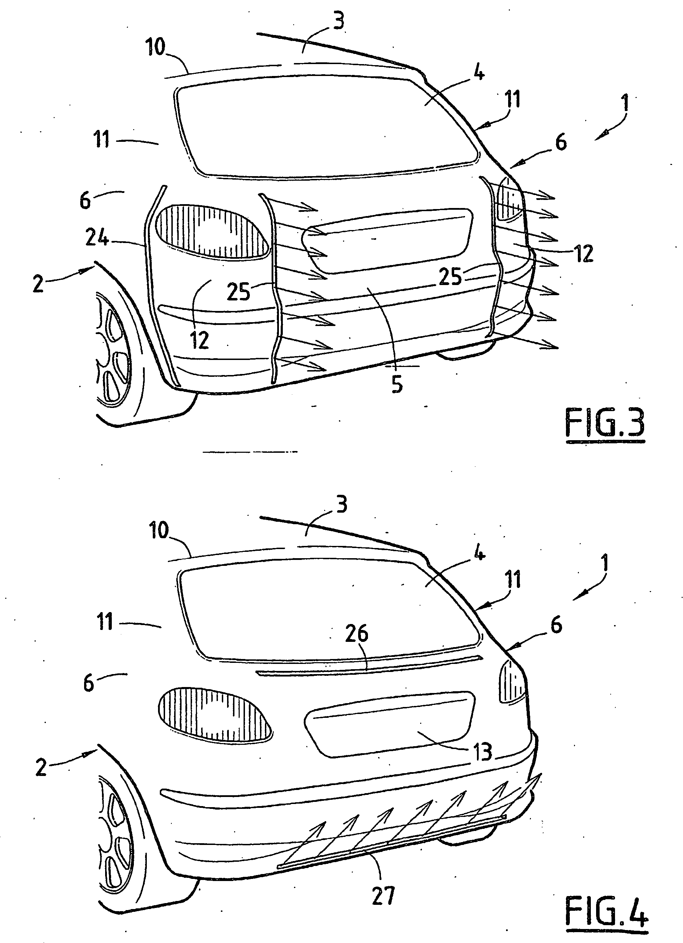

De même, ainsi que montré à la Fig. 3, chaque zone tourbillonnaire formée par chaque arête 12 comporte une fente d'aspiration 24 disposée en amont de cette arête 12 et une fente de soufflage 25 disposée en aval de ladite arête 12. Les fentes 24 et 25 sont reliées par un conduit, non représenté, et l'air aspiré par la fente 24 est éjecté par la fente 25.

Ainsi que montré à la Fig. 4, la zone tourbillonnaire formée par la partie centrale 13 du panneau de coffre 5 est pourvue d'une fente d'aspiration 26 disposée en amont de la partie centrale 13 de ce coffre 5 et d'une fente de soufflage 27 disposée en aval de ladite partie centrale 13 du panneau de coffre 5. Les fentes 26 et 27 sont également reliées par un conduit, non représenté, et l'air aspiré par la fente 26 est éjecté par la fente 27.

Les montants de baie avant du véhicule automobile peuvent être également équipés d'une fente d'aspiration et d'une fente de soufflage.

Les fentes d'aspiration, respectivement 20, 22, 24 et 26, servent à la fois à alimenter en air les fentes de soufflage, respectivement 21, 23, 25 et 27, et en même temps à aspirer la couche limite développée sur la carrosserie 2 du véhicule automobile 1 ce qui a également un effet bénéfique pour la structure globale de l'écoulement de l'air et donc pour les efforts aérodynamiques

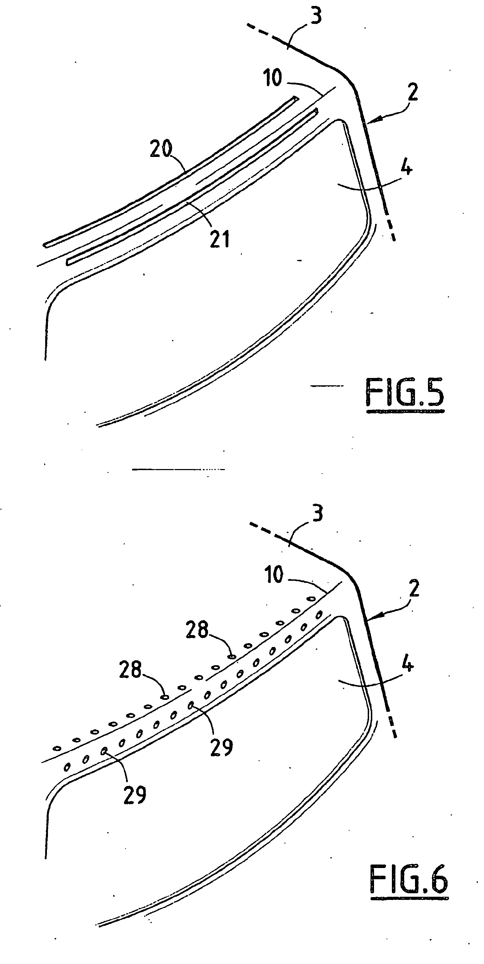

De préférence, les fentes d'aspiration 20, 22, 24 et 26 et les fentes de soufflage 21, 23, 25 et 27 s'étendent sensiblement parallèlement les unes aux autres, comme montré à la Fig. 5.

Pour augmenter le débit d'air entre la fente d'aspiration 20, 22, 24 et 26 ou les orifices 25 et la fente de soufflage 21, 23, 25 et 27 ou les orifices 29, un moto-ventilateur, non représenté, peut être prévu entre lesdites fentes ou lesdits orifices.

Selon une variante montrée à la Fig. 6, les moyens d'aspiration sont formés par des orifices 28 disposés de préférence selon une ligne et les moyens de soufflage sont formés par des orifices 29 également disposé de préférence selon une ligne s'étendant sensiblement parallèlement à la ligne formée par les orifices 28. Dans ce cas, l'air sortant des orifices de soufflage 29 est éjecté sous la forme de jets.

Les fentes d'aspiration ou les orifices s'étendent perpendiculairement à l'axe longitudinal du véhicule.

Les fentes d'aspiration, respectivement 20, 22, 24, 26, ou les orifices d'aspiration 28 sont disposés à une distance comprise entre 5 et 50 cm de la l'arête séparant deux des éléments de carrosserie et les fentes de soufflage, respectivement 21, 23, 25 et 27, ou les orifices de soufflage 29 sont disposés à une distance comprise entre 0 et 30 cm de cette arête.

Pour augmenter les débits disponibles à la sortie des fentes de soufflage 21, 23, 25 et 27 ou des orifices de soufflage 29, des groupes de moto-ventilation pulsés ou non peuvent être disposés au niveau de ces fentes ou de ces orifices.

Pour obtenir une efficacité optimale du système aérodynamique, plusieurs paramètres physiques peuvent être contrôlés ou pilotés. Ces paramètres sont la vitesse de sortie de l'air des fentes ou des orifices de soufflage et/ou l'angle de la direction de soufflage et/ou la fréquence de pulsation du soufflage.

En effet, la vitesse de sortie de l'air au niveau des fentes de soufflage 21, 23, 25 et 27 ou des orifices 29 peut être strictement dépendante de la vitesse du véhicule. Elle peut également être contrôlée, soit en pilotant les sections de sortie de ces fentes ou de ces orifices, soit à l'aide d'un pulseur. De préférence, les vitesses de soufflage nécessaires sont en générale comprises entre 0,01 et 2,5 fois la vitesse du véhicule automobile.

Par ailleurs, l'angle de soufflage de l'air formé par les fentes de soufflage 21, 23, 25 et 27 ou les orifices de soufflage 29 est, soit fixe pour toutes les conditions de roulement du véhicule automobile, soit piloté en fonction de différentes informations fournies par au moins un capteur, non représenté, de vitesse et/ou de frottement et/ou de pression implanté sur au moins un élément de la carrosserie 2 du véhicule automobile 1.

Dans le cas d'un angle de soufflage statique, il est nécessaire de déterminer l'angle optimum permettant le gain maximum sur le torseur aérodynamique.

Dans le cas d'un angle de soufflage piloté, cet angle de soufflage peut varier entre -90° et + 90° par rapport à la surface de l'élément de carrosserie correspondant.

Le débit de sortie de l'air des fentes de soufflage 21, 23, 25 et 27 ou des orifices de soufflage 29 peut être soit continu, soit discontinu et piloté selon une fréquence déterminée en fonction d'informations fournies par au moins un capteur, non représenté, de vitesse et/ou de frottement et/ou de pression implanté sur au moins un des éléments de la carrosserie 2 du véhicule automobile 1.

Enfin, la sortie de l'air de la fente de soufflage 21 , 23, 25 et 27 ou des orifices de soufflage 29 peut être déclenchée à une vitesse déterminée du véhicule automobile avec un angle, une vitesse et une fréquence fixes. Selon une variante, la sortie de l'air de la fente de soufflage 21, 23, 25 et 27 ou des orifices de soufflage 29 peut être déclenchée à une vitesse déterminée du véhicule automobile avec un angle et/ou une vitesse et/ou une fréquence variables en fonction d'informations fournies par au moins un capteur, non représenté, de vitesse et/ou de frottement et/ou de pression implanté sur au moins un des éléments de la carrosserie 2 du véhicule automobile 1.

Dans le cas d'orifices de soufflage 29, la distance entre les jets formés par ces orifices est ajustée de façon à assurer un gain maximal pour un type de véhicule déterminé. L'espacement entre les jets ou encore la longueur d'ondes, est un paramètre déterminant pour l'efficacité du système aérodynamique et, de préférence, cette longueur d'onde est comprise entre 1 et 5 fois le diamètre d'un jet.

Le système aérodynamique selon l'invention s'applique à un véhicule automobile qu'il soit monospace, bi-corps ou tri-corps et permet donc de réduire la traînée et la portance de ce véhicule et, de ce fait, de diminuer la consommation d'énergie et d'augmenter la stabilité dudit véhicule.

## Revendications

1. Système de réduction des efforts aérodynamiques et plus particulièrement de la traînée et de la portance aérodynamiques d'un véhicule automobile (1) comprenant une carrosserie (2) dont la partie arrière comporte des éléments de carrosserie (3, 4, 5, 6) créant entre eux des zones tourbillonnaires (10, 11, 12, 13), ledit système comprenant, en amont d'au moins une desdites zones tourbillonnaires (10, 11, 12, 13), des moyens (20, 22, 24, 26, 28) d'aspiration d'air dans l'axe longitudinal du véhicule et, en aval de ladite au moins zone tourbillonnaire (10, 11, 12, 13), des moyens (22, 23, 25, 27, 29) de soufflage dans l'axe longitudinal du véhicule de cet air aspiré pour contrôler l'écoulement de l'air au niveau de la partie arrière du véhicule automobile, lesdits moyens étant reliés entre eux par au moins un conduit et comprenant perpendiculairement à l'axe longitudinal du véhicule au moins une fente (20, 22, 24, 26 ; 21, 23, 25, 27) ou des orifices (28 ; 29) ménagés dans , l'élément de carrosserie correspondant pour former respectivement un rideau d'air ou des jets d'air, **caractérisé en ce que** la sortie de l'air de la fente (21, 23, 25, 27) ou des orifices (20) est déclenchée à une vitesse déterminée du véhicule avec un angle et/ou une vitesse et/ou une fréquence variables en fonction d'informations fournies par au moins un capteur de vitesse et/ou de frottement et/ou de pression implanté sur au moins un des éléments de la carrosserie du véhicule automobile.

2. Système selon la revendication 1, **caractérisé en ce que** la vitesse de sortie de l'air de la fente (21, 23, 25, 27) ou des orifices (29) est variable et comprise entre 0,01 et 2,5 fois la vitesse du véhicule automobile.

3. Système selon la revendication 1 ou 2, **caractérisé en ce que** l'angle de la direction de sortie de l'air de la fente (21, 23, 25, 27) ou des orifices (29) varie entre -90 et +90°.

4. Système selon l'une quelconque des revendications 1 à 3, **caractérisé en ce que** le débit de sortie de l'air de la fente (21, 23. 25, 27) ou des orifices (29) est continu.

5. Système selon l'une quelconque des revendications 1 à 4, **caractérisé en ce que** le débit de sortie de l'air de la fente (21, 23, 25, 27) ou des orifices (29) est discontinu et piloté selon une fréquence déterminée en fonction d'informations fournies par au moins un capteur de vitesse et/ou de pression et/ou de frottement implanté sur au moins un des éléments de la carrosserie du véhicule automobile.

## Claims

1. System for reducing aerodynamic forces and in particular the aerodynamic drag and lift of an automotive vehicle (1) which comprises bodywork (2) whose rear part includes bodywork components (3, 4, 5, 6) which create vortex zones (10, 11, 12, 13) between them, and where this system comprises upstream of at least one of the said vortex zones (10, 11, 12, 13), means (20, 22, 24, 26, 28) of drawing in air in the direction of the longitudinal axis of the vehicle and downstream of the aforementioned vortex zone or zones (10, 11, 12, 13) means (22, 23, 25, 27, 29) for discharge, along the longitudinal direction of the vehicle, of this air which has been drawn in so as to control the flow of air at the rear part of the automotive vehicle, with the said means being connected together by at least one conduit and comprising, perpendicular to the longitudinal axis of the vehicle, at least one slot (20, 22, 24, 26 ; 21, 23, 25, 27) or orifices (28 ; 29) set in the corresponding bodywork component to form, respectively, a curtain or jets of air, **characterised by** the fact that the outlet of air from the slot (21, 23, 25, 2 7) or orifices (20) is triggered at a given vehicle speed with an angle and/or speed and/or a frequency which varies depending on information provided by at least one speed and/or friction and/or pressure sensor installed in at least one bodywork component of the automotive vehicle.

2. System according to claim 1, **characterised by** the fact that the speed at which the air leaves the slot (21, 23, 25, 27) or orifices (29) is variable and is between 0.01 and 2.5 times the speed of the automotive vehicle.

3. System according to claim 1 or 2, **characterised by** the fact that the angle of the direction at which the air leaves the slot (21, 23, 25, 27) or orifices (29) varies between -90 and +90°.

4. System according to any of claims 1 to 3, **characterised by** the fact that the air discharge flow from the slot (21, 23, 25, 27) or orifices (29) is continuous.

5. System as described in any of claims 1 to 4, **characterised by** the fact that the air discharge flow from the slot (21, 23, 25, 27) or orifices (29) is discontinuous and is controlled according to a set frequency depending on information provided by at least on speed and/or friction and/or pressure sensor located on at least one of the bodywork components of the automotive vehicle.

## Patentansprüche

1. System zum Verringern aerodynamischer Kräfte und insbesondere des Luftwiderstandes und des aerodynamischen Auftriebs eines Kraftfahrzeugs (1), das eine Karosserie (2) aufweist, dessen hinterer Teil Karosserieelemente (3, 4, 5, 6) enthält, die zwischen sich Wirbelzonen (10, 11, 12, 13) erzeugen, wobei das System vor wenigstens einer der Wirbelzonen (10, 11, 12, 13) Mittel (20, 22, 24, 2G, 28) zum Ansaugen von Luft in Richtung der Längsachse des Fahrzeugs und hinter der wenigstens einen Wirbelzone ( 10, 11, 12, 13) Mittel (22, 23, 25, 27, 29) zum Ausblasen dieser angesaugten Luft in Richtung der Längsachse des Fahrzeugs umfasst, um die. Strömung der Luft auf Höhe des hinteren Teils des Kraftfahrzeugs zu steuern, wobei die Mittel, durch wenigstens einen Kanal miteinander verbunden sind und senkrecht zur Längsachse des Fahrzeugs wenigstens einen Schlitz (20, 22, 24, 26; 21, 23, 25, 27) oder Öffnungen (28; 29), die in dem entsprechenden Karosserieelement ausgebildet sind, umfassen, um einen Luftvorhang bzw. Luftstrahlen zu bilden, **dadurch gekennzeichnet, dass** der Austritt der Luft aus dem Schlitz (21, 23, 25, 27) oder aus den Öffnungen (20) bei einer bestimmten Geschwindigkeit des Fahrzeugs in Abhängigkeit von Informationen, die von wenigstens einem Geschwindigkeits- und/oder Reibungs- und/oder Drucksensor geliefert werden, der in wenigstens eines der Karosserieelemente des Kraftfahrzeugs implantiert ist, mit einem veränderlichen Winkel und/oder einer veränderlichen Geschwindigkeit und/oder einer veränderlichen Frequenz ausgelöst wird.

2. System nach Anspruch 1, **dadurch gekennzeichnet, dass** die Austrittsgeschwindigkeit der Luft aus dem Schlitz (21, 23, 25, 27) oder aus den Öffnungen (29) veränderlich ist und im Bereich der 0,01- bis 2,5-fachen Geschwindigkeit des Kraftfahrzeugs liegt.

3. System nach Anspruch 1 oder 2, **dadurch gekennzeichnet, dass** sich der Winkel der Austrittsrichtung der Luft aus dem Schlitz (21, 23, 25, 27) oder aus den Öffnungen (29) zwischen -90° und +90° ändert.

4. System nach einem der Ansprüche 1 bis 3, **dadurch gekennzeichnet, dass** die aus dem Schlitz (21, 23, 25, 27) oder den Öffnungen (29) austretende Luftdurchflussmenge kontinuierlich ist.

5. System nach einem der Ansprüche 1 bis 4, **dadurch gekennzeichnet, dass** die aus dem Schlitz (21, 23, 25, 27) oder den Öffnungen (29) austretende Luftdurchflussmenge diskontinuierlich ist und gemäß einer gegebenen Frequenz in Abhängigkeit von Informationen vorgesteuert wird, die von wenigstens einem Geschwindigkeits- und/oder Druck- und/oder Reibungssensor, der in wenigstens eines der Karosserieelemente des Kraftfahrzeugs implantiert ist, geliefert werden.
